# EUROPÄISCHE PATENTSCHRIFT

(11) **EP 3 118 379 B1**
(45) Veröffentlichungstag und Bekanntmachung des Hinweises auf die Patenterteilung: **26.02.2020**
(21) Anmeldenummer: 16176798.3
(22) Anmeldetag: 29.06.2016
(51) Int. Cl.: E03B 7/07, C02F 1/28

(54) **SYSTEM UMFASSEND EINE SICHERUNGSEINRICHTUNG ZUR ABSICHERUNG EINER TRINKWASSERINSTALLATION GEGENÜBER EINEM TRINKWASSER ODER NICHTTRINKWASSER FÜHRENDEN WASSERLEITUNGSSYSTEM, UND EINE VERWENDUNG EINER SOLCHEN SICHERUNGSEINRICHTUNG**
SYSTEM COMPRISING SAFETY DEVICE FOR THE PROTECTION OF A DRINKING WATER INSTALLATION RELATIVE TO A WATER ROUTING SYSTEM CONVEYING DRINKING WATER OR NON-DRINKING WATER, AND A USE OF SUCH SAFETY DEVICE
SYSTÈME COMPRENANT UN DISPOSITIF DE SECURISATION D'UNE INSTALLATION D'EAU POTABLE PAR RAPPORT A UN SYSTEME DE CONDUITE D'EAU ACHEMINANT UNE EAU POTABLE OU NON POTABLE, ET UN USAGE D'UN TEL DISPOSITIF DE SECURATION

(30) Priorität: 14.07.2015 DE 202015103694 U
(43) Veröffentlichungstag der Anmeldung: 18.01.2017
(73) Patentinhaber: Grünbeck Wasseraufbereitung GmbH, 89420 Höchstäd a.d. Donau (DE)
(72) Erfinder: Dr., Söcknick, Ralf, 70806 Kornwestheim (DE)
(74) Vertreter: Charrier Rapp & Liebau

(56) Entgegenhaltungen:
- EP-A1- 2 392 395
- DE-U1-202014 100 427
- US-A1- 2010 018 911
- US-A1- 2013 056 428

## Beschreibung

Die Erfindung betrifft die Verwendung einer Sicherungseinrichtung zur Absicherung einer Trinkwasserinstallation, welche mit der öffentlichen Trinkwasserversorgung verbunden ist, gegenüber einem ein Fluid führendes Fluidführungssystem , insbesondere gegenüber einem Trinkwasser oder Nichttrinkwasser führenden Wasserleitungssystem . Die Erfindung betrifft weiterhin ein System umfassend eine mit der öffentlichen Trinkwasserversorgung verbindbare Trinkwasserinstallation, ein mit der Trinkwasserinstallation verbundenes Fluidführungssystem, in dem ein Fluid geführt ist und welches mindestens eine Entnahmestelle und/oder einen Wasserapparat enthält, und eine Sicherungseinrichtung, die im Bereich des Fluidführungssystem installiert ist, um eine Verunreinigung des in der Trinkwasserinstallation geführten Trinkwassers zu verhindern.

Bei der Versorgung technischer Anlagen und Geräte mit Trinkwasser ist regelmäßig sicherzustellen, dass die Trinkwasserleitung, über welche die Anlage oder das Gerät mit Trinkwasser versorgt wird, nicht durch den Rückfluss von Flüssigkeiten verschmutzt werden kann, welche eine Gefährdung für die menschliche Gesundheit darstellen können. Flüssigkeiten werden gemäß DIN EN 1717: 2001 in folgenden Flüssigkeitskategorien unterteilt:
- Flüssigkeitskategorie 1:: Wasser für den menschlichen Gebrauch, das direkt aus einer Trinkwasser-Installation entnommen wird,
- Flüssigkeitskategorie 2:: Flüssigkeit, die keine Gefährdung der menschlichen Gesundheit darstellt, aber im Geruch, Geschmack oder Farbe von Kategorie 1 abweicht,
- Flüssigkeitskategorie 3:: Flüssigkeit, die eine leichte Gesundheitsgefährdung durch die Anwesenheit einer oder mehrere weniger giftiger Stoffe darstellt,
- Flüssigkeitskategorie 4:: Flüssigkeit, die eine schwere Gesundheitsgefährdung durch die Anwesenheit giftiger, radioaktiver, mutagener oder kancerogener Substanzen darstellt,
- Flüssigkeitskategorie 5:: Flüssigkeit, die eine erhebliche Gesundheitsgefährdung durch die Anwesenheit von mikrobiellen oder viruellen Erregern übertragbarer Krankheiten darstellt.

Zur Absicherung von Trinkwasserleitungen gegenüber Rohrleitungen oder Anlagen, die mit Flüssigkeiten der Flüssigkeitskategorie 5 in Berührung kommen können, ist gemäß DIN EN 1717: 2001 eine Absicherung in Form eines ungehinderten freien Auslaufs des Trinkwassers in einer Sicherheitstrennstation (Typ AA) gefordert, um eine ausreichende Absicherung des Trinkwassers gegen Kontamination durch eine Flüssigkeit der Flüssigkeitskategorie 5 zu gewährleisten. Derartige Sicherheitstrennstationen sind technisch aufwendig und teuer. Ferner ist die Nachrüstung von bereits bestehenden Rohrleitungssystemen oder Anlagen, welche mit Flüssigkeiten der Flüssigkeitskategorie 5 beaufschlagbar sind, mit einer solchen Sicherheitstrennstation häufig nicht möglich.

Aus der EP 2392395 A1 ist ein Trinkwassersystem für ein Flugzeug mit einem Trinkwassertank, einer Zufuhrleitung, einer Pumpe und mehreren Entnahmestellen bekannt, wobei in der Zufuhrleitung eine Wasserreinigungseinrichtung vorgesehen ist, die einen Partikelfilter und einen Filter für Mikroorganismen mit einem elektropositiven Filtermaterial enthält.

Es besteht das Bedürfnis, eine zuverlässige Absicherung einer Trinkwasserinstallation gegenüber einem Wasserleitungssystem zu ermöglichen, welches Trinkwasser oder Nichttrinkwasser führen kann, welche mit ausreichender Sicherheit einen Rückfluss von Flüssigkeit der Kategorie 5 in die Trinkwasserinstallation verhindert, ohne hierfür eine teure, technisch aufwendige und wartungsintensive Anlage mit einem ungehinderten freien Auslauf bereit stellen zu müssen. Hiervon ausgehend liegt der Erfindung die Aufgabe zugrunde, eine technisch einfache und kostengünstige sowie wartungsarme Sicherungseinrichtung zur Absicherung einer Trinkwasserinstallation gegenüber einem Trinkwasser oder Nichttrinkwasser führenden Wasserleitungssystem aufzuzeigen, welche zuverlässig einen Rückfluss von Flüssigkeit der Flüssigkeitskategorie 5 aus dem Wasserleitungssystem in die Trinkwasserinstallation verhindert.

Diese Aufgabe wird mit der Verwendung einer Sicherungseinrichtung mit den Merkmalen des Anspruchs 1 gelöst. Die abhängigen Ansprüche 2 bis 8 zeigen bevorzugte Ausführungsformen der Verwendung der Sicherheitseinrichtung auf. Die Aufgabe wird weiterhin mit dem System mit den Merkmalen des Anspruchs 9 gelöst. Die abhängigen Ansprüche 10 bis 14 zeigen bevorzugte Ausführungsformen des Systems auf.

Die erfindungsgemäße Verwendung einer Sicherungseinrichtung dient zur Absicherung einer Trinkwasserinstallation, die mit der öffentlichen Trinkwasserversorgung verbunden werden kann, gegenüber einem ein Fluid führendes Fluidführungssystem, welches mit der Trinkwasserinstallation verbunden ist, wobei die Sicherungseinrichtung im Bereich des Fluidführungssystem installiert wird und eine den Rückfluss des Fluids aus dem Fluidführungssystem in die Trinkwasserinstallation verhindernde Sicherungsarmatur sowie wenigstens einen als Adsorptionsfilter ausgebildeten Keimfilter umfasst, der ein Filtermaterial mit einem in wässriger Umgebung elektrokinetischen, insbesondere elektropositiven Potential (Zeta-Potential) enthält.

Die Trinkwasserinstallation kann mit der öffentlichen Trinkwassernetz verbunden werden, welches vor Verschmutzung durch Nichttrinkwasser aus den daran angeschlossenen Kundenanlagen (private oder gewerbliche Trinkwasserinstallation) zu schützen ist. Bei dem Fluidführungssystem handelt es sich in diesem Fall um die privaten oder gewerblichen Trinkwasserinstallationen, welche an das öffentliche Trinkwassernetz angeschlossen sind.

Bei der zu schützenden Trinkwasserinstallation kann es sich jedoch um eine private oder gewerbliche Trinkwasserinstallation (Kundenanlage) handeln, insbesondere um eine an die öffentliche Trinkwasserversorgung anschliessbare Trinkwasserinstallation, in der Entnahmestellen und/oder Wasserapparate installiert sind. In diesem Fall handelt es sich bei dem Fluidführungssystem um ein mit der Trinkwasserinstallation verbundenes System, in dem ein Fluid geführt werden kann, welches die Entnahmestellen und/oder Wasserapparate enthält. In dem Fluidführungssystem kann dabei insbesondere eine Flüssigkeit geführt werden, welche einer der Flüssigkeitskategorien 2 bis 5 zuzuordnen ist. Die erfindungsgemäße Verwendung der Sicherungseinrichtung ist dabei zweckmäßig an der Schnittstelle zwischen der Trinkwasserinstallation und dem Fluidführungssystem angeordnet, wobei die Sicherungsarmatur die Schnittstelle zwischen der Trinkwasserinstallation und dem Fluidführungssystem definiert und der Keimfilter im Bereich des Fluidführungssystems liegt.

Die Sicherungsarmatur umfasst dabei eine hydromechanische Absperreinrichtung, welche einen Rückfluss des Fluids aus dem Wasserführungssystem in die Trinkwasserinstallation verhindert. Bei der Sicherungsarmatur kann es sich bspw. um einen Rückflussverhinderer oder einen Systemtrenner handeln. Die Sicherungsarmatur stellt damit eine mechanische Sicherung gegen das Rückfließen von Wasser aus dem Fluidführungssystem in die Trinkwasserinstallation dar. Derartige mechanische Sicherungsarmaturen in Form von Rückflussverhinderern sind aus dem Stand der Technik bekannt und in der DIN EN 1717 definiert. Es wird dabei zwischen kontrollierbaren Rückflussverhinderern (beispielsweise des Typs EA, EC) und nicht kontrollierbaren Rückflussverhinderern (beispielsweise des Typ EB, ED) unterschieden. Solche Rückflussverhinderer sind mit wenigstens einem Schließkörper ausgestattet, der den Durchfluss von Wasser in nur eine vorgegebene Durchflussrichtung ermöglicht und den Rückfluss entgegen der Durchflussrichtung verhindert. Der Rückflussverhinderer öffnet dabei automatisch, wenn der Druck auf der Zulaufseite größer ist als hinter der Armatur. Bei höherem Druck hinter der Armatur oder nicht vorhandenem Durchfluss schließt der Rückflussverhinderer selbsttätig, beispielsweise durch die Vorspannung einer Feder. Derartige Rückflussverhinderer sind regelmäßig am Übergabepunkt der öffentlichen Trinkwasserversorgung zu einer Kundenanlage (private oder gewerbliche Trinkwasserinstallation) eingebaut, um einen Rückfluss von Wasser aus der privaten oder gewerblichen Kundenanlage in die öffentliche Trinkwasserversorgung zu verhindern. Auch Systemtrenner des Typs CA und BA umfassen derartige Rückflussverhinderer.

Ein Rückflussverhinderer stellt allerdings keine ausreichende Barriere gegen das Eindringen von pathogenen Mikroorganismen, insbesondere Viren und Keime, wie z. B. Legionellen und Pseudomonaden, dar. Wenn das in einem Wasserleitungssystem geführte Wasser aufgrund einer zu hohen Belastung mit pathogenen Mikroorganismen, insbesondere von mikrobiellen oder viruellen Erregern, welche Krankheiten übertragen können, zu einer erheblichen Gesundheitsgefährdung führen kann, ist über die obligatorische Sicherung der Trinkwasserinstallation gegen einen Rückfluss von verunreinigter Flüssigkeit aus dem mit der Trinkwasserinstallation verbundenen Fluidführungssystem eine über eine Rückflussverhinderung weitergehende Absicherung erforderlich, welche den Durchtritt der pathogenen Mikroorganismen durch die Sicherungsarmatur zuverlässig unterbindet.

Statt der in der DIN EN 1717 geforderten Sicherungseinrichtung gegen den Rückfluss von Flüssigkeit der Kategorie 5 in eine Trinkwasserinstallation über das Vorsehen eines freien Auslaufs sieht die Erfindung eine Sicherung über den in der Sicherungseinrichtung angeordneten Keimfilter vor, wobei der Keimfilter aufgrund seines elektrokinetischen Potentials (Zeta-Potentials) des Filtermaterials in der Lage ist, Mikroorganismen durch Elektroadsorption am Filtermaterial zu binden. Bei dem in der Sicherungseinrichtung verwendeten Keimfilter handelt es sich um einen (Elektro)adsoptionsfilter, bei dem sich die dem durchströmenden Wasser entzogenen Mikroorganismen im Inneren des Filtermaterials (und nicht an seiner Oberfläche) anlagern. Der Keimfilter wirkt dabei sowohl in der vorgesehenen Strömungsrichtung des Fluids von der Trinkwasserinstallation in das über die erfindungsgemäße Sicherungseinrichtung damit verbundene Fluidführungssystem, sondern auch in entgegengesetzter Richtung, also bei einem Rückfluss des Fluids aus dem Fluidführungssystem in die zu sichernde Trinkwasserinstallation. Falls ein Rückfluss von Wasser aus dem Fluidführungssystem in die zu sichernde Trinkwasserinstallation erfolgen sollte, ist der erfindungsgemäß in der Sicherungseinrichtung vorgesehene Keimfilter in der Lage, in dem Fluid des Fluidführungssystems etwaig vorhandene (pathogene) Mikroorganismen zu filtern und in dem Filtermaterial des Keimfilters zu binden, bevor das mikrobiell oder viruell belastete Wasser des Fluidführungssystems in die Sicherungsarmatur an der Schnittstelle zwischen der Trinkwasserinstallation und dem Fluidführungssystem gelangen kann. Der erfindungsgemäß in der Sicherungseinrichtung vorgesehene Keimfilter sorgt also dafür, dass bei einem Rückfluss von mikrobiell oder viruell belastetem Wasser aus dem Fluidführungssystem in Richtung der Trinkwasserinstallation zunächst eine Desinfizierung beziehungsweise Entkeimung des belasteten Wassers erfolgt, bevor dieses in die Sicherungsarmatur eintritt. An der durch die Sicherungsarmatur gegen Rückfluss gesicherten Schnittstelle zwischen dem Fluidführungssystem, welches Trinkwasser oder Nichttrinkwasser führen kann, und der zu sichernden Trinkwasserinstallation kann deshalb jedenfalls keine Flüssigkeit der Kategorie 5 anstehen, so dass eine Sicherungsarmatur, wie z.B. ein Rückflussverhinderer, an dieser Schnittstelle ausreicht, um eine Verunreinigung des Trinkwassers der Trinkwasserinstallation zu verhindern.

Gemäss dem erfindungsgemässen System ist die Sicherungseinrichtung im Bereich des Fluidführungssystems angeordnet, wobei in dem Fluidführungssystem wenigstens eine Entnahmestelle und/oder ein Wasserapparat installiert sind, und die Sicherungseinrichtung eine Sicherungsarmatur sowie wenigstens einen als Adsorptionsfilter ausgebildeten Keimfilter umfasst, welcher zwischen der Sicherungsarmatur und einer Entnahmestelle oder eines Wasserapparats des Wasserleitungssystems angeordnet ist. Erfindungsgemäß enthält der Keimfilter dabei ein Filtermaterial mit einem in wässriger Umgebung elektrokinetischen, insbesondre elektropositiven Potential (Zeta-Potential). Die Sicherungseinrichtung schützt dabei die Trinkwasserinstallation vor dem Rückfließen von bakteriologisch kontaminiertem Wasser aus dem Wasserleitungssystem in die Trinkwasserinstallation. Dadurch wird eine schädliche Belastung des Trinkwassers der Trinkwasserinstallation auch ohne das Vorsehen eines freien Auslaufs mit ausreichender Sicherheit verhindert.

Das Filtermaterial des in der Sicherungseinrichtung verwendeten Keimfilters ist zweckmäßig als elektropositiver Textil-Verbundstoff ausgebildet, der insbesondere ein Gemisch von Mikro- oder Nanoteilchen oder Fasern eines Metalloxids, wie z.B. Aluminiumoxid oder Aluminiumhydroxid oder Böhmit, sowie ein faseriges Trägermaterial, beispielsweise aus Polymer-, Carbon- oder Glasfasern, enthält oder vollständig aus einem solchen Gemisch besteht. Besonders zweckmäßig ist dabei ein Gemisch aus Aluminiumoxid- bzw. Aluminiumhydroxid- oder Böhmit-Fasern mit einem Faserdurchmesser im Bereich von wenigen Nanometern bis zu 10 µm und einem faserigen Trägermaterial, bspw. ein Faservlies aus Carbon- oder Glasfasern. Als besonders geeignet haben sich dabei aluminiumhaltige Fasern mit einem Durchmesser im Nanometerbereich und insbesondere im Bereich von 2 bis 100 nm und einem Verhältnis von Länge zu Durchmesser von mehr als 5 erwiesen.

Um (auch) positiv geladene Teilchen aus dem Wasser am Keimfilter zu adsorbieren, ist es zweckmäßig, wenn das Filtermaterial des Keimfilters alternativ oder zusätzlich ein Silikat, insbesondere Aluminium- oder Calzium-Silikat enthält. Solche Silikate weisen in wässriger Umgebung ein negatives elektrokinetisches Potenzial auf und sind deshalb in der Lage, positiv geladene Teilchen aus der Flüssigkeit durch Elektroadsorption an dem Filtermaterial zu binden.

Bei dem Filtermaterial des Keimfilters kann es sich auch um ein keramisches Trägermaterial handeln, welches mit einer Beschichtung versehen ist, die ein Material mit einem (positiven oder negativen) Zeta-Potential enthält, wie z.B. die oben genannten Metalloxide bzw. Metallhydroxide und/oder Böhmit. Zweckmäßig enthält das Filtermaterial neben einem Material mit einem (positiven oder negativen) Zeta-Potential zusätzlich noch Silber, bspw. in Form von Silberfäden, wodurch eine keimtötende Wirkung des Filtermaterials erzeugt wird. Diese und weitere Vorteile und Merkmale der Erfindung ergeben sich aus den nachfolgend unter Bezugnahme auf die begleitenden Zeichnungen näher beschriebenen Ausführungsbeispielen. Die Zeichnungen zeigen:
- **Figur 1:**: schematische Darstellung eines mit einer Sicherungseinrichtung ausgestatteten Anschlusses einer Kundenanlage (privater oder gewerblicher Anschlussnehmer) an der Trinkwasserinstallation der öffentlichen Trinkwasserversorgung;
- **Figur 2:**: schematische Darstellung eines mit einer Trinkwasserinstallation verbundenen und mit einer Sicherungseinrichtung ausgestatteten Fluidführungssystems, welches Entnahmestellen und Wasserapparate enthält;
- **Figur 3:**: schematische Darstellung der Verbindung eines Wasserversorgungssystems der Einzelversorgung mit einer Trinkwasserinstallation der öffentlichen Trinkwasserversorgung über eine erfindungsgemäße Sicherungseinrichtung;
- **Figur 4:**: schematische Darstellung einer als Wickelfilter ausgebildeten Ausführungsform eines Keimfilters zur Verwendung in der Sicherungseinrichtung;
- **Figur 5:**: perspektivische Darstellung einer als Plisseefilter ausgebildeten Ausführungsform eines Keimfilters zur Verwendung in der Sicherungseinrichtung;

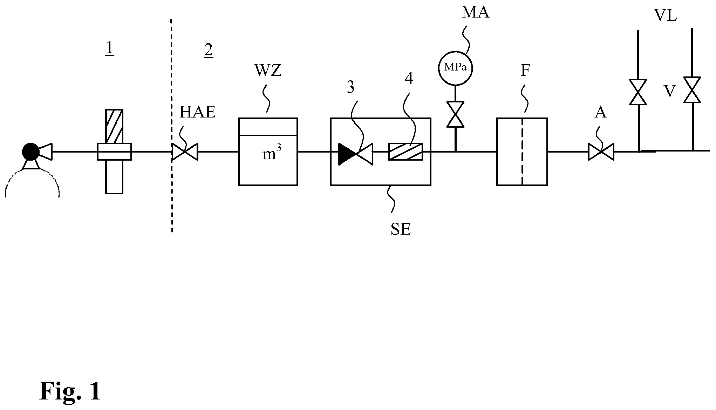

In Figur 1 ist der Hausanschluss einer Kundenanlage (private oder gewerbliche Trinkwasser-Anlage) an einer Trinkwasserinstallation 1, die mit der öffentlichen Trinkwasserversorgung verbunden werden kann, schematisch dargestellt. Die Kundenanlage ist dabei das Fluidführungssystem 2, welches in diesem Fall zur Führung bzw. Leitung von Trinkwasser dient, das aus der Trinkwasserinstallation 1 zugeführt wird. Der in Figur 1 gezeigte Hausanschluss umfasst dabei eine Hauptabsperreinrichtung (HAE), welche die Schnittstelle zwischen der Trinkwasserinstallation 1 und dem Fluidführungssystem 2 der Kundenanlage darstellt, sowie einen Wasserzähler WZ, eine erfindungsgemäße Sicherungseinrichtung SE, einen Manometeranschluss MA, einen Partikelfilter F, ein Absperrventil A sowie über Ventile V absperrbare Versorgungsleitungen VL, an denen hier nicht dargestellte Entnahmestellen angeordnet sind. Die erfindungsgemäße Sicherungseinrichtung SE umfasst dabei eine Sicherungsarmatur 3 und einen Keimfilter 4, der ein Filtermaterial mit einem in wässriger Umgebung elektrokinetischen, insbesondere elektropositiven Potential (Zeta-Potential) enthält.

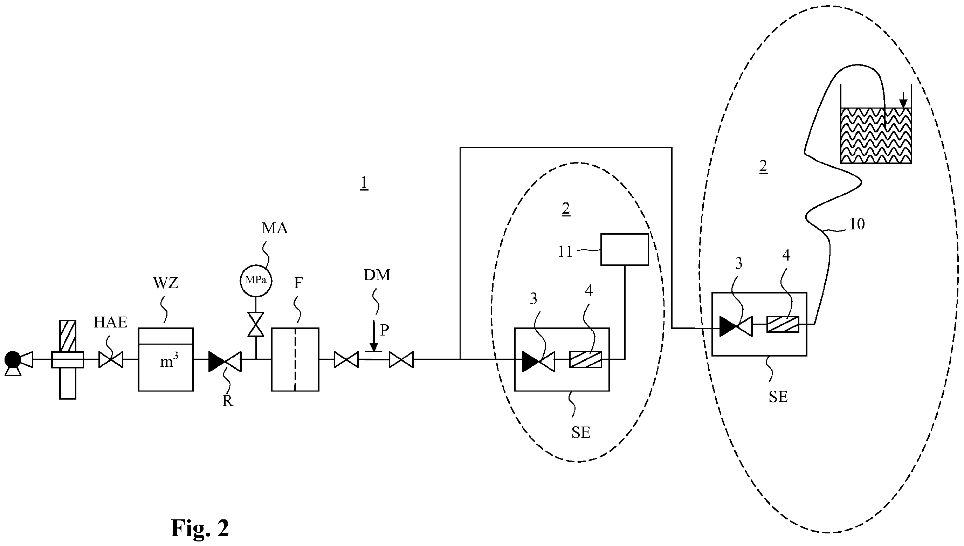

Der im Hausanschluss der Figur 1 vorgesehene Partikelfilter F (gem. DIN 19628, DIN EN 13443-1) dient zum Ausfiltern von Schmutzpartikeln, die bspw. von den Leitungen in die Trinkwasserinstallation 1 eingespült worden sind. Dieser Partikelfilter F kann, wie in Figur 1 gezeigt, stromabwärts der Sicherungseinrichtung SE oder auch stromaufwärts der Sicherungseinrichtung SE angeordnet werden, insbesondere zwischen dem Wasserzähler WZ und der Sicherungseinrichtung SE. Zweckmäßig kann zusätzlich noch ein Druckminderer DM vorgesehen werden (s. Figur 2).

Die Sicherungsarmatur 3 umfasst dabei eine hydromechanische Absperreinrichtung, welche einen Rückfluss des Fluids aus dem Wasserführungssystem 2 (Kundenanlage) in die Trinkwasserinstallation 1 verhindert. Bei der Sicherungsarmatur 3 handelt es sich bspw. um einen Rückflussverhinderer oder einen Systemtrenner. Der in der Sicherungseinrichtung SE enthaltene Keimfilter 4 kann aufgrund seines elektrokinetischen Potentials (Zeta-Potentials) des Mikroorganismen durch Elektroadsorption am Filtermaterial binden. Der Keimfilter wirkt dabei sowohl in der vorgesehenen Strömungsrichtung des Trinkwassers von der Trinkwasserinstallation 1 in das über die erfindungsgemäße Sicherungseinrichtung SE damit verbundene Fluidführungssystem der Kundenanlage, als auch in entgegengesetzter Richtung, also bei einem Rückfluss von Wasser aus dem Fluidführungssystem 2 der Kundenanlage in die zu sichernde Trinkwasserinstallation der öffentlichen Trinkwasserversorgung. Dabei ist der Strömungswiderstand (anders als bspw. bei der Ultrafiltration) zumindest im Wesentlichen unabhängig von der Strömungsrichtung. Falls ein Rückfluss von Wasser aus dem Fluidführungssystem 2 der Kundenanlage in die zu sichernde Trinkwasserinstallation 1 erfolgen sollte, ist der erfindungsgemäß in der Sicherungseinrichtung vorgesehene Keimfilter in der Lage, in dem Fluid des Fluidführungssystems etwaig vorhandene (pathogene) Mikroorganismen zu filtern und in dem Filtermaterial des Keimfilters 4 zu binden, bevor das mikrobiell oder viruell belastete Wasser des Fluidführungssystems in die Sicherungsarmatur 3 gelangen kann. Der erfindungsgemäß in der Sicherungseinrichtung SE vorgesehene Keimfilter 4 sorgt also dafür, dass bei einem Rückfluss von mikrobiell oder viruell belastetem Wasser aus dem Fluidführungssystem 2 der Kundenanlage in Richtung der Trinkwasserinstallation 1 zunächst eine Desinfizierung beziehungsweise Entkeimung des belasteten Wassers erfolgt, bevor dieses in die Sicherungsarmatur 3 eintritt. An der Sicherungsarmatur 3 der Sicherungseinrichtung SE kann deshalb jedenfalls keine Flüssigkeit der Kategorie 5 anstehen, so dass eine Sicherungsarmatur 3, wie z.B. ein Rückflussverhinderer, an dieser Stelle ausreicht, um eine (drohende) Verunreinigung des Trinkwassers der Trinkwasserinstallation 1 zu verhindern.

In Figur 2 ist die Trinkwasserinstallation 1 einer Kundenanlage (private oder gewerbliche Trinkwasser-Anlage) schematisch dargestellt. Die Trinkwasserinstallation 1 der Kundenanlage ist dabei über den in Figur 1 gezeigten Hausanschluss an der öffentlichen Trinkwasserversorgung angeschlossen und wird von dieser mit Trinkwasser versorgt. Die Trinkwasserinstallation 1 der Kundenanlage umfasst dabei wenigstens eine Entnahmestelle 10, sowie eine Wasserapparatur 11. Bei den Entnahmestellen 10 kann es sich bspw. um Zapfstellen wie Zapfhähne, Brauseschläuche oder dgl. handeln. Bei der Wasserapparatur 11 kann es sich um Wasserbehandlungsgeräte handeln, wie z.B. Wassererwärmer oder Ionenaustauscheranlagen, wie Enthärtungsanlagen, Aktivkohlefilter und Membrananlagen, oder auch um Apparate, welche mit Wasser betrieben werden und zu diesem Zweck mit der Trinkwasserinstallation 1 der Kundenanlage verbunden werden können, wie z.B. Wasserverdampfer, Springbrunnen, Gartenbewässerungsgeräte, etc.. Die (gesamte) Trinkwasserinstallation der Kundenanlage, welche mit der öffentlichen Wasserversorgung verbunden ist und nach der Hauptabsperreinrichtung HAE beginnt, stellt bei diesem Ausführungsbeispiel der Erfindung die Trinkwasserinstallation 1 dar, während die Entnahmestellen 10 und die Wasserapparate 11, die an die Trinkwasserinstallation 1 der Kundenanlage angeschlossen sind, jeweils ein Fluidführungssystem 2 darstellen. In dem Fluidführungssystem 2 kann Trinkwasser oder Nichttrinkwasser oder auch eine andere Flüssigkeit geführt werden, die nicht Trinkwasser darstellt und damit der Flüssigkeitskategorie 2 oder höher zuzuordnen ist.

Zur Absicherung der Trinkwasserinstallation 1 der Kundenanlage gegen Verunreinigung durch Rückfluss der im jeweiligen Fluidführungssystem 2 geführten Flüssigkeit ist bei diesem Ausführungsbeispiel der Erfindung vorgesehen, dass jede Entnahmestelle 10 und jeder Wasserapparat 11, welche an die Trinkwasserinstallation 1 der Kundenanlage angeschlossen sind, mit einer Sicherungseinrichtung SE gemäß der Erfindung ausgestattet sind. Wie in dem Ausführungsbeispiel der Figur 1 umfasst die Sicherungseinrichtung SE dabei wiederum eine Sicherungsarmatur 3 und einen Keimfilter 4, der ein Filtermaterial mit einem in wässriger Umgebung elektrokinetischen Potential (Zeta-Potential) enthält.

Nach der Trinkwasserverordnung ist die "Stelle der Einhaltung" der Sicherungsvorschriften zur Absicherung von Trinkwasserinstallationen gegen Verunreinigung am Austritt aus denjenigen Zapfstellen (Entnahmestellen) definiert, die sich in einer Trinkwasserinstallation befinden und der Entnahme von Trinkwasser dienen. Durchströmt das Trinkwasser Apparate, in denen die Trinkwasserbeschaffenheit entsprechend der Grenzwerte der Trinkwasserverordnung bestimmungsgemäß verloren geht, endet die Trinkwasserinstallation am Sicherungspunkt mit den zugeordneten Sicherungseinrichtungen. Entsprechend dieser Vorgaben der Trinkwasserverordnung endet die Trinkwasserinstallation 1 der Kundenanlage der Figur 2 an den Entnahmestellen 10 bzw. den Wasserapparaten 11. Die Schnittstelle zwischen der Trinkwasserinstallation 1 der Kundenanlage und dem Fluidführungssystem 2 stellt dabei jeweils die Sicherungsarmatur 3 der Sicherungseinrichtung SE dar. Stromabwärts der Sicherungsarmatur 3 und damit auf der Seite des Fluidführungssystems 2 ist jeweils der Keimfilter 4 der Sicherungseinrichtung SE angeordnet und daran schließt sich dann in stromabwärtiger Richtung die Entnahmestelle 10 bzw. der Wasserapparat 11 an.

Aufgrund der Ausstattung jeder Entnahmestelle 10 und jedes Wasserapparats 11, welche in dem Ausführungsbeispiel der Figur 2 an die Trinkwasserinstallation 1 der Kundenanlage angeschlossen sind, mit einer Sicherungseinrichtung SE gemäß der Erfindung, ist eine ausreichende Absicherung der Trinkwasserinstallation 1 der Kundenanlage gegen Verunreinigung durch Rückfluss der im jeweiligen Fluidführungssystem 2 (Entnahmestelle 10 bzw. Wasserapparat 11) geführten Flüssigkeit gewährleistet. Insbesondere ist die Trinkwasserinstallationen 1 der Kundenanlage gegen Verunreinigung durch Rückfluss einer ggf. mikrobiell belasteten und damit gesundheitsgefährdenden Flüssigkeit aus einer Entnahmestelle 10 oder einem Wasserapparat 11 in die Trinkwasserinstallation 1 gesichert, weil ein Rückfluss von Flüssigkeit durch die Sicherungsarmatur 3 verhindert wird und aufgrund des in der Sicherungseinrichtung vorgesehenen Keimfilters 4 an der Sicherungsarmatur 3 keine Flüssigkeit der Kategorie 5 anstehen kann. Auf die Verwendung eines freien Auslaufs, wie bisher im Stand der Technik von der Norm DIN EN 1717 gefordert, kann daher bei Vorsehen der Sicherungseinrichtung verzichtet werden.

Wie bei dem Ausführungsbeispiel der Figur 1 kann auch in dem Ausführungsbeispiel der Figur 2 der Hausanschluss der Trinkwasserinstallation 1 der Kundenanlage an der öffentlichen Trinkwasserversorgung über eine erfindungsgemäße Sicherungseinrichtung SE verfügen. Diese (zusätzliche) Sicherungseinrichtung SE gemäß der Erfindung kann zur Absicherung der öffentlichen Trinkwasserversorgung gegen Verunreinigung durch Wasser aus der Trinkwasserinstallation 1 der Kundenanlage an die Stelle des in Figur 2 zwischen dem Wasserzähler WZ und dem Manometeranschluss MA vorgesehenen Rückflussverhinderers R eingesetzt werden.

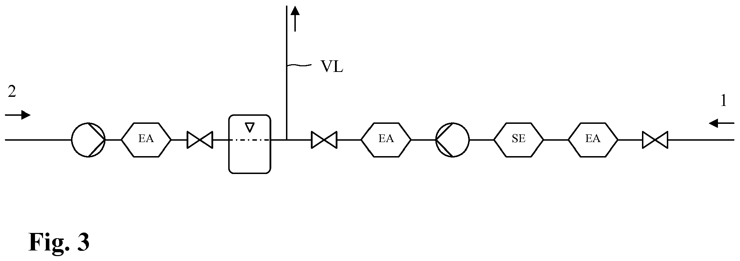

In Figur 3 ist ein weiteres Anwendungsbeispiel für eine erfindungsgemäße Sicherungseinrichtung SE gezeigt. Figur 3 zeigt schematisch eine Verbindung eines Wasserversorgungssystems 2 einer Einzelversorgung mit einer Trinkwasserinstallation 1 gem. der Norm DIN EN 1717, wobei das Wasserversorgungssystems 2 der Einzelversorgung und die Verbindung zur Trinkwasserinstallation 1 der öffentlichen Trinkwasserversorgung in eine Verbindungsleitung VL führen. Hierfür ist gem. der Norm DIN EN 1717 zwingend eine Sicherungseinrichtung SE in Form eines freien Auslaufs (AA oder AB) vorgesehen. Anstatt eines freien Auslaufs (AA oder AB) kann an der Stelle der Sicherungseinrichtung SE eine Sicherungseinrichtung gemäß der Erfindung mit einer Sicherungsarmatur 3 und einem Keimfilter 4 vorgesehen werden, um eine ausreichende Absicherung der Trinkwasserinstallation 1 sicher zu stellen.

Die Sicherungsarmatur 3 und der Keimfilter 4 der Sicherungseinrichtung SE gemäß der Erfindung sind zweckmäßig als Baueinheit miteinander verbunden und insbesondere in einem gemeinsamen Gehäuse angeordnet. Das Gehäuse weist dabei zweckmäßig zwei Anschlussstutzen (Einlass und Auslass) zum Einbau in eine Wasserleitung bzw. einen Wasserapparat auf. Im Innern des Gehäuses sind die Sicherungsarmatur 3 und der Keimfilter 4 über eine Zwischenleitung miteinander verbunden. Dabei ist es auch möglich, mehrere Keimfilter 4 vorzusehen und in Strömungsrichtung hintereinander anzuordnen. Es können dabei auch weitere Filterelemente zusammen mit einem oder mehreren Keimfiltern 4 in dem Gehäuse vorgesehen sein, wie bspw. Aktivkohlefilter und/oder Partikelfilter.

Zur Regenerierung des Filtermaterials des oder der Keimfilter 4 verfügt die erfindungsgemäße Sicherungseinrichtung bevorzugt über eine Regeneriereinrichtung. Die Regeneriereinrichtung kann bspw. durch eine Heizeinrichtung zum Erhitzen des Keimfilters 4 und/oder durch eine Bestrahlungseinrichtung zur Bestrahlung des Filters 4 mit UV-Licht gebildet sein. Bevorzugt enthält die Regeneriereinrichtung eine Heizwendel, welche um oder durch das Filtermaterial des Keimfilters 4 geführt und mit elektrischem Strom beaufschlagbar ist. Mittels der durch die Heizwendel gebildeten Heizeinrichtung kann das Filtermaterial des Keimfilters 4 zweckmäßig in vorgegebenen Zeitabständen bzw. Regenerierphasen auf Temperaturen von wenigstens 70°C erhitzt werden, um die in dem Filter 4 adsorbierten Mikroorganismen abzutöten.

Die Regeneriereinrichtung kann alternativ oder zusätzlich zur Heizeinrichtung bzw. zur Bestrahlungseinrichtung eine Spüleinrichtung zum Einleiten einer Spülflüssigkeit und/oder eines Desinfektionsmittels in den Keimfilter 4 umfassen. Durch Einleitung eines Desinfektionsmittels können ebenfalls die am Filtermaterial adsorbierten Mikroorganismen abgetötet werden. Durch Einleitung einer Spülflüssigkeit können die vom Filtermaterial abgelösten und abgetöteten Mikroorganismen aus dem Keimfilter 4 ausgespült werden, um diesen wieder zu regenerieren. Dabei sind entsprechende Ventile vorzusehen, damit während der Regeneration kein Wasser an der Sicherungseinrichtung SE vorbeiströmen kann.

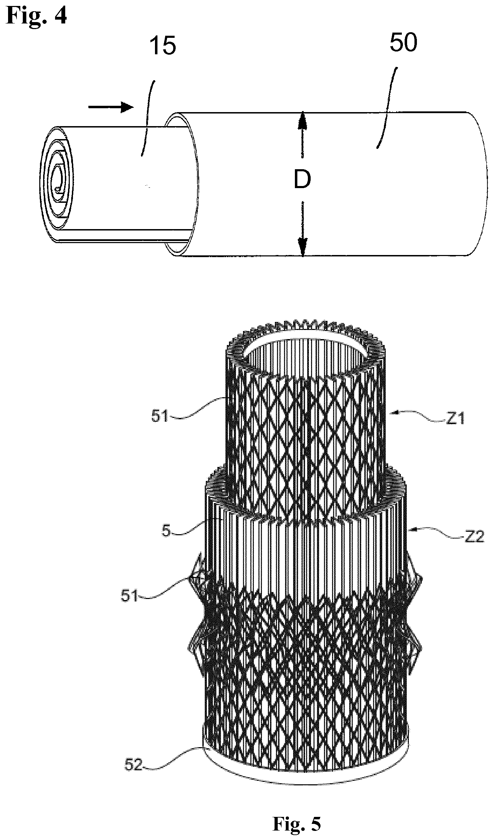

In den Figuren 4 und 5 sind Ausführungsbeispiele für Keimfilter 4 gezeigt, wie sie in den oben beschriebenen Sicherungseinrichtungen verwendet werden können. Das Ausführungsbeispiel der Figur 4 zeigt dabei einen als Wickelfilter ausgebildeten Keimfilter mit einem zu einem Zylinder aufgewickelten Filtermaterial 15, bei dem es sich bspw. um ein flächiges Papier- oder Textilmaterial handeln kann, das in wässriger Umgebung ein elektrokinetisches Potential (Zeta-Potential) aufweist.

Zweckmäßig ist das zylindrisch aufgewickelte Filtermaterial 15 in eine Filterkartusche integriert, welche in das Gehäuse der oben beschriebenen Baueinheit einer Sicherungseinrichtung austauschbar eingesetzt werden kann. Hierfür ist, wie in Figur 4 gezeigt, das zylindrisch aufgewickelte Filtermaterial 15 in einem rohrförmigen Kartuschengehäuse 50 aus einem wasserdichten Material angeordnet. Das zu filtrierende Wasser tritt dabei durch die offenen Stirnseiten des Kartuschengehäuses 50 in den Keimfilter 4 ein und strömt durch im Filtermaterial 15 ausgebildete Kanäle, welche durch benachbarte Lagen des zylindrisch aufgewickelten Filtermaterials 15 gebildet sind. Das Kartuschengehäuse 50 mit dem darin angeordneten Filtermaterial 15 kann in das Gehäuse der Baueinheit der Sicherungseinrichtung austauschbar eingesetzt werden. Dies ermöglicht einen raschen und einfachen Wechsel eines verbrauchten Keimfilters 4. Der Keimfilter 4 weist dabei keine vorgegebene oder vorbestimmte Strömungsrichtung auf, da die in der zu filtrierenden Flüssigkeit enthaltenen Mikroorganismen im Inneren des Filtermaterials durch Elektroadsorption gebunden werden und sich nicht (wie bei einem Porenfilter) an der Oberfläche anlagern.

Ein als Wickelfilter ausgebildeter Keimfilter setzt sich bevorzugt aus aufgewickelten und dadurch übereinander liegenden Lagen eines flächigen und elektroaktiven Papier- oder Textilmaterials zusammen, welche durch (in Figur 4 nicht gezeigte) Abstandshalter voneinander getrennt sind. Die Abstandshalter sind dabei zwischen benachbarten Lagen des Wickelfilters angeordnet und erstrecken sich in Längsrichtung des Filters (entlang der Achse des Zylinders). Dadurch werden zwischen benachbarten Lagen des Wickelfilters und den Abstandshaltern Kanäle ausgebildet, die sich in Längsrichtung des Filters erstrecken und zumindest im Wesentlichen parallel zueinander verlaufen. Bei den Abstandshaltern kann es sich um längliche, beispielsweise stabförmige Abstandshalter handeln, die in Längsrichtung des Filters angeordnet sind. Bevorzugt weisen die Abstandshalter eine wellenförmige oder eine zick-zack-förmige Struktur auf, ähnlich der Struktur einer Wellpappe. Besonders zweckmäßig ist es, die Abstandshalter ebenso wie die Lagen des Wickelfilters aus einem elektroaktiven Material (mit einem in wässriger Umgebung positiven oder negativen Zeta-Potential) zu fertigen. Dadurch wird gewährleistet, dass die Kanäle des Filters allseitig von Kanalwänden begrenzt werden, die durch ein in wässriger Umgebung elektroaktives Material (d.h. durch ein Material mit einem elektrokinetischen (Zeta)-Potenzial), begrenzt werden. Auf diese Weise wird eine große effektive und aktive Filterfläche bereitgestellt. Insgesamt wirkt der Keimfilter dabei als Tiefenfilter, d.h. die Abscheidung der Teilchen (Mikroorganismen) erfolgt durch Elektroadsorption am elektroaktiven Filtermaterial im Innern des Filtermediums.

In Figur 5 ist ein als zylindrischer Plisseefilter ausgebildeter Keimfilter 4 gezeigt. Zur Herstellung eines solchen Filters kann bspw. ein flächiges Papier- oder Textilmaterial zunächst plisseeförmig gefaltet werden und anschließend werden die Ränder einer plisseeförmig gefalteten Lage des flächigen Filtermaterials zur Ausbildung eines zylindrischen Filterplissee miteinander verbunden, so dass ein Zylindermantel entsteht. Wie in Figur 5 dargestellt, können mehrere solcher Zylinder Z1, Z2 mit unterschiedlichen Durchmessern ineinander gesteckt werden, um eine noch größere effektive Filteroberfläche zu erhalten. Zweckmäßig wird das zylindrische Filterplissee des äußeren Zylinders Z2 oder jedes Zylinders Z1, Z2 in einem haltenden Netzkäfig 51 angeordnet. Der Netzkäfig 51 kann dabei bspw. aus einem Kunststoff- oder Drahtgeflecht gebildet sein und ist an einem scheibenförmigen Boden 52 befestigt. Zur Verdeutlichung ist in Figur 5 der obere Abschnitt des äußeren Zylinders Z2 weg gelassen und der Netzkäfig ist teilweise aufgerollt gezeigt. Bei einem solchen Plisseefilter strömt das Wasser bspw. an der äußeren Zylindermantelfläche ein und sammelt sich dann als Filtrat im Inneren des Plisseefilters, von wo es mit einem Sammelrohr axial abgeführt wird. Eine Filtration in umgekehrter Richtung, also von innen nach außen, ist ebenfalls möglich.

## Patentansprüche

1. Verwendung einer Sicherungseinrichtung zur Absicherung einer mit der öffentlichen Trinkwasserversorgung verbundenen Trinkwasserinstallation (1) gegenüber einem ein Fluid führendes Fluidführungssystem (2), welches mit der Trinkwasserinstallation (1) verbunden ist, wobei die Sicherungseinrichtung im Bereich des Fluidführungssystem (2) zu installieren ist, um eine Verunreinigung des in der Trinkwasserinstallation (1) geführten Trinkwassers zu verhindern, und wobei die Sicherungseinrichtung eine den Rückfluß des Fluids aus dem Fluidführungssystem (2) in die Trinkwasserinstallation (1) verhindernde Sicherungsarmatur (3) und wenigstens einen als Adsorptionsfilter ausgebildeten Keimfilter (4) umfasst, der ein Filtermaterial (5) mit einem in wässriger Umgebung elektrokinetischen Potential enthält.

2. Verwendung einer Sicherungseinrichtung nach Anspruch 1, **dadurch gekennzeichnet, dass** es sich bei dem Filtermaterial (5) um einen elektropositiven Textil-Verbundstoff handelt und/oder dass das Filtermaterial ein Metalloxid, insbesondere Aluminumoxid und/oder Aluminumhydroxid und/oder Böhmit und/oder Zirkonoxid und/oder Zirkoniumhydroxid, und/oder ein Silikat, insbesondere Aluminium- oder Calcium-Silikat, enthält.

3. Verwendung einer Sicherungseinrichtung nach einem der voranstehenden Ansprüche, **dadurch gekennzeichnet, dass** das Filtermaterial (5) ein Gemisch von Mikro- oder Nanoteilchen oder -Fasern eines Metalloxids mit einem Trägermaterial, insbesondere aus Polymer-, Carbon- oder Glasfasern oder einer Mischung davon, enthält oder aus einem solchen Gemisch besteht.

4. Verwendung einer Sicherungseinrichtung nach einem der voranstehenden Ansprüche, **dadurch gekennzeichnet, dass** das Filtermaterial (5) ein keramisches Trägermaterial aufweist, welches mit einer Beschichtung versehen ist, die ein Metalloxid und/oder ein Metallhydroxid enthält.

5. Verwendung einer Sicherungseinrichtung nach einem der voranstehenden Ansprüche, **dadurch gekennzeichnet, dass** der Keimfilter (4) und die Sicherungsarmatur (3) als Baueinheit und insbesondere in einem gemeinsamen Gehäuse angeordnet sind.

6. Verwendung einer Sicherungseinrichtung nach einem der voranstehenden Ansprüche, **gekennzeichnet durch** eine Regeneriereinrichtung zur Regenerierung des Keimfilters (4).

7. Verwendung einer Sicherungseinrichtung nach einem der voranstehenden Ansprüche, **dadurch gekennzeichnet, dass** es sich bei der Sicherungsarmatur (3) um einen Rückflussverhinderer oder einen Systemtrenner handelt.

8. Verwendung einer Sicherungseinrichtung nach einem der voranstehenden Ansprüche, **dadurch gekennzeichnet, dass** die Sicherungsarmatur (3) eine hydromechanische Absperreinrichtung umfasst, welche einen Rückfluss des Fluids aus dem Fluidführungssystem (2) in die Trinkwasserinstallation (1) verhindert.

9. System umfassend eine mit der öffentlichen Trinkwasserversorgung verbindbare Trinkwasserinstallation (1) und ein mit der Trinkwasserinstallation (1) verbundenes Fluidführungssystem (2), in dem ein Fluid geführt ist und welches mindestens eine Entnahmestelle (10) und/oder einen Wasserapparat (11) sowie eine Sicherungseinrichtung enthält, wobei die Sicherungseinrichtung im Bereich des Fluidführungssystem (2) installiert ist, um eine Verunreinigung des in der Trinkwasserinstallation (1) geführten Trinkwassers zu verhindern, wobei die Sicherungseinrichtung (20) wenigstens einen als Adsorptionsfilter ausgebildeten Keimfilter (4) umfasst, wobei der Keimfilter (4) ein Filtermaterial mit einem in wässriger Umgebung elektrokinetischen Potential enthält, **dadurch gekennzeichnet, dass** die Sicherungseinrichtung eine den Rückfluß des Fluids aus dem Fluidführungssystem (2) in die Trinkwasserinstallation (1) verhindernde Sicherungsarmatur (3) und den wenigstens einen als Adsorptionsfilter ausgebildeten Keimfilter (4) umfasst, die als Baueinheit in einem gemeinsamen Gehäuse angeordnet sind, und die Sicherungseinrichtung auf einer Zulaufseite der Entnahmestelle (10) und/oder des Wasserapparats (11) angeordnet ist.

10. System nach Anspruch 9, wobei es sich bei dem Fluidführungssystem (2) um ein Wasserleitungssystem handelt, in dem Wasser in Form von Trinkwasser oder Nichttrinkwasser geführt ist.

11. System nach Anspruch 10, wobei das Wasserleitungssystem eine Flüssigkeit der Flüssigkeitskategorie 5 führt.

12. System nach Anspruch 9 oder 10, **dadurch gekennzeichnet, dass** der Keimfilter (4) in Strömungsrichtung des Trinkwassers von der Trinkwasserinstallation (1) in das Fluidführungssystem (2) gesehen stromabwärts der Sicherungsarmatur (3) und unmittelbar vor einer Entnahmestelle (10) oder eines Wasserapparats (11) angeordnet ist.

13. System nach einem der Ansprüche 9 bis 12, **gekennzeichnet durch** eine Regeneriereinrichtung zur Regenerierung des Keimfilters (4).

14. System nach Anspruch 13, **dadurch gekennzeichnet, dass** die Regeneriereinrichtung eine Heizeinrichtung zum Erhitzen des Filters (4) und/oder eine Bestrahlungseinrichtung zur Bestrahlung des Filters (4) mit UV-Licht oder eine Spüleinrichtung zum Einleiten einer Spülflüssigkeit und/oder eines Desinfektionsmittels in den Filter (4) umfasst.

## Claims

1. Use of a safety device for protecting a drinking water installation (1) connected to the public drinking water supply with respect to a fluid guiding system (2) guiding a fluid which is connected to the drinking water installation (1), wherein the safety device is to be installed in the region of the fluid guiding system (2) in order to prevent contamination of the drinking water guided in the drinking water installation (1), and wherein the safety device comprises a safety fitting (3) preventing backflow of the fluid from the fluid guiding system (2) into the drinking water installation (1) and at least one germ filter (4) designed as an adsorption filter which contains a filter material (5) with an electrokinetic potential in an aqueous environment.

2. Use of a safety device according to claim 1, **characterised in that** the filter material (5) is an electropositive textile composite and/or **in that** the filter material contains a metal oxide, in particular aluminium oxide and/or aluminium hydroxide and/or boehmite and/or zirconium oxide and/or zirconium hydroxide, and/or a silicate, in particular aluminium silicate or calcium silicate.

3. Use of a safety device according to one of the preceding claims, **characterised in that** the filter material (5) contains a mixture of microparticles or nanoparticles or microfibres or nanofibres of a metal oxide with a carrier material, in particular of polymer fibres, carbon fibres or glass fibres or a mixture thereof or consists of such a mixture.

4. Use of a safety device according to one of the preceding claims, **characterised in that** the filter material (5) has a ceramic carrier material which is provided with a coating containing a metal oxide and/or a metal hydroxide.

5. Use of a safety device according to one of the preceding claims, **characterised in that** the germ filter (4) and the safety fitting (3) are arranged as a modular unit and in particular in a common housing.

6. Use of a safety device according to one of the preceding claims, **characterised by** a regenerating device for regenerating the germ filter (4).

7. Use of a safety device according to one of the preceding claims, **characterised in that** the safety fitting (3) is a backflow preventer or a system separator.

8. Use of a safety device according to one of the preceding claims, **characterised in that** the safety fitting (3) comprises a hydromechanical blocking device which prevents backflow of the fluid from the fluid guiding system (2) into the drinking water installation (1).

9. System comprising a drinking water installation (1) which is connectable to the public drinking water supply and a fluid guiding system (2) connected to the drinking water installation (1) and in which a fluid is guided and which contains at least one discharge point (10) and/or a water apparatus (11) and a safety device, wherein the safety device is installed in the region of the fluid guiding system (2) in order to prevent contamination of the drinking water guided in the drinking water installation (1), wherein the safety device (20) comprises at least one germ filter (4) designed as an adsorption filter, wherein the germ filter (4) contains a filter material with an electrokinetic potential in an aqueous environment, **characterised in that** the safety device comprises a safety fitting (3) preventing backflow of the fluid from the fluid guiding system (2) into the drinking water installation (1) and the at least one germ filter (4) designed as an adsorption filter which are arranged as a modular unit in a common housing, and the safety device is arranged on a feed side of the discharge point (10) and/or of the water apparatus (11).

10. System according to claim 9, wherein the fluid guiding system (2) is a water supply system, in which water in the form of drinking water or non-drinking water is guided.

11. System according to claim 10, wherein the water supply system guides a liquid of liquid category 5.

12. System according to claim 9 or 10, **characterised in that** the germ filter (4) is arranged, seen in flow direction of the drinking water from the drinking water installation (1) into the fluid guiding system (2), downstream of the safety fitting (3) and immediately before a discharge point (10) or a water apparatus (11).

13. System according to one of claims 9 to 12, **characterised by** a regenerating device for regenerating the germ filter (4).

14. System according to claim 13, **characterised in that** the regenerating device comprises a heating device for heating the filter (4) and/or an irradiating device for irradiating the filter (4) with UV light or a rinsing device for introducing a rinsing liquid and/or a disinfectant into the filter (4).

## Revendications

1. Utilisation d'un dispositif de sécurisation servant à protéger une installation d'eau potable (1) raccordée à l'alimentation en eau potable publique par rapport à un système d'acheminement de fluide (2) acheminant un fluide, lequel est raccordé à l'installation d'eau potable (1), dans laquelle le dispositif de sécurisation est à installer dans la zone du système d'acheminement de fluide (2) pour empêcher une contamination de l'eau potable acheminée dans l'installation d'eau potable (1), et dans laquelle le dispositif de sécurisation comprend une robinetterie de sécurisation (3) empêchant le reflux du fluide provenant du système d'acheminement de fluide (2) dans l'installation d'eau potable (1) et au moins un filtre anti-germes (4) réalisé en tant que filtre d'adsorption, qui contient un matériau filtrant (5) avec un potentiel électrocinétique en milieu aqueux.

2. Utilisation d'un dispositif de sécurisation selon la revendication 1, **caractérisée en ce que** le matériau filtrant (5) est une matière composite textile électropositive, et/ou que le matériau filtrant contient un oxyde métallique, en particulier de l'oxyde d'aluminium et/ou de l'hydroxyde d'aluminium et/ou de la boehmite et/ou de la zircone et/ou de l'hydroxyde de zirconium et/ou un silicate, en particulier du silicate d'aluminium ou de calcium.

3. Utilisation d'un dispositif de sécurisation selon l'une quelconque des revendications précédentes, **caractérisée en ce que** le matériau filtrant (5) contient un mélange de micro ou nanoparticules ou de micro ou nanofibres d'un oxyde métallique avec un matériau de support, en particulier composé de fibres de polymère, de carbone ou de verre ou un mélange de ceux-ci ou est constitué d'un mélange de ce type.

4. Utilisation d'un dispositif de sécurisation selon l'une quelconque des revendications précédentes, **caractérisée en ce que** le matériau filtrant (5) présente un matériau de support en céramique, lequel est pourvu d'un revêtement qui contient un oxyde métallique et/ou un hydroxyde métallique.

5. Utilisation d'un dispositif de sécurisation selon l'une quelconque des revendications précédentes, **caractérisée en ce que** le filtre anti-germes (4) et la robinetterie de sécurisation (3) sont disposés en tant qu'unité modulaire et en particulier dans un boîtier commun.

6. Utilisation d'un dispositif de sécurisation selon l'une quelconque des revendications précédentes, **caractérisée par** un dispositif de régénération servant à la régénération du filtre anti-germes (4).

7. Utilisation d'un dispositif de sécurisation selon l'une quelconque des revendications précédentes, **caractérisée en ce que** la robinetterie de sécurisation (3) est un système empêchant tout reflux ou un séparateur de système.

8. Utilisation d'un dispositif de sécurisation selon l'une quelconque des revendications précédentes, **caractérisée en ce que** la robinetterie de sécurisation (3) comprend un dispositif de fermeture hydromécanique, lequel empêche un reflux du fluide provenant du système d'acheminement de fluide (2) dans l'installation d'eau potable (1).

9. Système comprenant une installation d'eau potable (1) pouvant être raccordée à l'alimentation en eau potable publique et un système d'acheminement de fluide (2) raccordé à l'installation d'eau potable (1), dans lequel un fluide est acheminé et lequel contient au moins un emplacement de prélèvement (10) et/ou un appareil à eau (11) ainsi qu'un dispositif de sécurisation, dans lequel le dispositif de sécurisation est installé dans la zone du système d'acheminement de fluide (2) pour empêcher une contamination de l'eau potable acheminée dans l'installation d'eau potable (1), dans laquelle le dispositif de sécurisation (20) comprend au moins un filtre anti-germes (4) réalisé en tant que filtre d'adsorption, dans laquelle le filtre anti-germes (4) contient un matériau filtrant avec un potentiel électrocinétique en milieu aqueux, **caractérisée en ce que** le dispositif de sécurisation comprend une robinetterie de sécurisation (3) empêchant le reflux du fluide provenant du système d'acheminement de fluide (2) dans l'installation d'eau potable (1) et l'au moins un filtre anti-germes (4) réalisé en tant que filtre d'adsorption, qui sont disposés en tant qu'unité modulaire dans un boîtier commun, et le dispositif de sécurisation est disposé sur un côté alimentation de l'emplacement de prélèvement (10) et/ou de l'appareil à eau (11).

10. Système selon la revendication 9, dans lequel le système d'acheminement de fluide (2) est un système de conduite d'eau, dans lequel de l'eau est acheminée sous la forme d'eau potable ou d'eau non potable.

11. Système selon la revendication 10, dans lequel le système de conduite d'eau achemine un liquide de la catégorie de liquide 5.

12. Système selon la revendication 9 ou 10, **caractérisé en ce que** le filtre anti-germes (4) est disposé dans la direction d'écoulement de l'eau potable vu depuis l'installation d'eau potable (1) dans le système d'acheminement de fluide (2) en aval de la robinetterie de sécurisation (3) et directement avant un emplacement de prélèvement (10) ou d'un appareil à eau (11).

13. Système selon l'une quelconque des revendications 9 à 12, **caractérisé par** un dispositif de régénération servant à la régénération du filtre anti-germes (4).

14. Système selon la revendication 13, **caractérisé en ce que** le dispositif de régénération comprend un dispositif de chauffage servant à réchauffer le filtre (4) et/ou un dispositif d'irradiation servant à irradier le filtre (4) d'une lumière UV ou un dispositif de rinçage servant à introduire un liquide de rinçage et/ou un agent de désinfection dans le filtre (4).
